# EUROPÄISCHE PATENTSCHRIFT

(11) **EP 3 938 164 B1**
(45) Veröffentlichungstag und Bekanntmachung des Hinweises auf die Patenterteilung: **30.07.2025**
(21) Anmeldenummer: 20712868.7
(22) Anmeldetag: 11.03.2020
(51) Int. Cl.: B29C 33/06, B29C 70/54, B29C 70/30, B29C 35/08, H05B 6/10, H05B 6/44, B29C 35/02

(54) **WERKZEUGVORRICHTUNG ZUR HERSTELLUNG EINES VERBUNDWERKSTOFF-BAUTEILS UND VERFAHREN ZUR HERSTELLUNG EINES BAUTEILS AUS EINEM VERBUNDWERKSTOFF**
TOOL APPARATUS FOR PRODUCING A COMPOSITE MATERIAL COMPONENT AND METHOD FOR PRODUCING A COMPONENT FROM A COMPOSITE MATERIAL
DISPOSITIF D'OUTIL SERVANT À FABRIQUER UN COMPOSANT EN MATÉRIAU COMPOSITE, ET PROCÉDÉ DE FABRICATION D'UN COMPOSANT À PARTIR D'UN MATÉRIAU COMPOSITE

(30) Priorität: 11.03.2019 DE 102019106107
(43) Veröffentlichungstag der Anmeldung: 19.01.2022
(73) Patentinhaber: Deutsches Zentrum für Luft- und Raumfahrt e.V., 51147 Köln (DE)
(72) Erfinder: SCHNEIDER, Marvin, 71083 Herrenberg (DE); KADEN, Markus, 70372 Stuttgart (DE)
(74) Vertreter: Hoeger, Stellrecht & Partner Patentanwälte mbB
(86) Internationale Anmeldenummer: PCT/EP2020/056470
(87) Internationale Veröffentlichungsnummer: WO 2020/182865

(56) Entgegenhaltungen:
- DE-A1- 102013 223 284
- DE-A1- 102016 209 487
- DE-U1- 202015 100 080
- US-A1- 2012 018 089

## Beschreibung

Die Erfindung betrifft eine Werkzeugvorrichtung zur Herstellung eines Verbundwerkstoff-Bauteils, umfassend ein Formwerkzeug mit einem Anlagebereich für ein Werkstück, wobei das Formwerkzeug mindestens in einem Teilbereich aus einem elektrisch leitfähigen Material hergestellt ist, und eine Induktionsheizvorrichtung mit einer induktiven Heizmatte, wobei die Heizmatte beabstandet zu dem Formwerkzeug positioniert ist, eine Positionierung des Werkstücks zwischen der Heizmatte und dem Formwerkzeug anliegend an dem Formwerkzeug vorgesehen ist, und eine Beheizung des Formwerkzeugs mindestens in einem Teilbereich durch die Induktionsheizvorrichtung vorgesehen ist.

Die Erfindung betrifft ferner ein Verfahren zur Herstellung eines Bauteils aus einem Verbundwerkstoff mittels eines Formwerkzeugs, bei dem ein Werkstück an das Formwerkzeug an einem Anlagebereich des Formwerkzeugs angelegt wird, und mindestens ein Teilbereich des Anlagebereichs des Formwerkzeugs durch eine induktive Heizmatte berührungslos beheizt wird, wobei das Werkstück zwischen dem Anlagebereich und der Heizmatte positioniert wird.

Die DE 10 2016 209 487 A1 offenbart eine Induktionsheizvorrichtung, umfassend mindestens eine Spulenlage mit einer Spuleneinrichtung und einem Träger, an welchem die Spuleneinrichtung angeordnet ist, wobei die mindestens eine Spulenlage biegeflexibel ausgebildet ist und in das Strukturmaterial einer Vakuumhaube eingebettet ist und die Vakuumhaube mit der mindestens einen Spulenlage biegeflexibel ausgebildet ist.

Die US 2012/0018089 A1 offenbart eine Formwerkzeugvorrichtung zur Herstellung von Teilen aus Verbundmaterialien, wobei eine verformbare Membran vorgesehen ist.

In der DE 10 2013 111 266 A1 ist eine Spulenvorrichtung beschrieben, umfassend mindestens eine stromtragende Hochfrequenzlitze und einen Träger für die mindestens eine Hochfrequenzlitze, wobei der mindestens eine Träger ein Maschennetz ist und die mindestens eine Hochfrequenzlitze über einen oder mehrere Haltefäden, welche an der mindestens einen Hochfrequenzlitze an Stegen des Maschennetzes anliegen, gehalten ist.

Aus der DE 10 2008 037 224 A1 ist eine Entspannungsmatte zur Übertragung von durch magnetische Felder erzeugten Schwingungen auf Organismen bekannt, welche mindestens eine Flachspule aufweist, über welcher, das Magnetfeld der Flachspule schneidend, Permanentmagneten flächig nebeneinander angeordnet sind.

Aus der DE 101 55 935 A1 ist ein intelligentes Etikett bekannt, welches einen textilen Träger umfasst und einen flexiblen draht- und/oder fadenartigen elektrischen Leiter umfasst, wobei der Leiter an oder in dem textilen Träger angeordnet ist.

Aus der DE 10 2011 106 648 A1 ist ein tragbarer Datenträger mit Antenne bekannt, wobei die Antenne durch Verbindung von Längsfäden und Querfäden eines elektrischen leitfähigen Gewebes hergestellt ist.

Aus der DE 10 2008 036 101 A1 ist ein industriell gefertigtes textiles Material bekannt, das mindestens eine elektrisch leitende Struktur in Form mindestens einen Musters aufweist.

Aus der DE 32 05 048 A1 ist eine Magnetspule bekannt, welche aus flachen, flexiblen Leiterlitzen besteht.

Aus der DE 196 15 647 C2 ist eine Spulenmatte zur Erzeugung eines flächenhaften Magnetfelds bekannt.

Aus der DE 10 2011 076 463 A1 ist ein Reparaturverfahren für ein Formteil aus einem Kunststoffmaterial bekannt, bei dem ein Reparaturelement aus dem Kunststoffmaterial auf einen beschädigten Bereich des Formteils aufgebracht und durch Einwirkung von Wärme mit diesem stoffschlüssig verbunden wird. Die Wärme wird mittels eines passiven Heizelements aus einem elektrisch leitenden Material erzeugt, indem das Heizelement mit einem magnetischen Wechselfeld beaufschlagt wird.

Aus der EP 0 271 250 ist eine Induktionsheizspule bekannt.

Aus der DE 10 2013 223 284 A1 ist eine Vorrichtung zur Herstellung eines faserverstärkten Kunststoffbauteils bekannt, mit einem Umformwerkzeug, in dem ein platinenartiges, insbesondere textiles Faserhalbzeug warmumformbar ist, in dem elektrisch leitfähige Verstärkungsfasern in einem wärmeaktivierbaren Binder eingebettet sind, und mit einer Induktionsheizung, die zumindest einen Induktor zur Erzeugung eines magnetischen Wechselfelds aufweist, das in den elektrisch leitfähigen Verstärkungsfasern des Faserhalbzeugs elektrische Ströme induziert. Der Induktor ist zumindest ein vom Umformwerkzeug separates, flächiges Einlegeteil, das zusammen mit dem Faserhalbzeug in das Umformwerkzeug einlegbar ist.

Aus der EP 2 508 329 A1 ist eine Verbundmaterialkonsolidierungsvorrichtung zum induktiven Erwärmen und Konsolidieren eines Verbundmaterials bekannt.

Aus der DE 10 2015 114 880 A1 ist ein induktiv beheizbares Formwerkzeug bekannt, umfassend eine Induktor-Aufnahme sowie einen als Empfänger des von einem Induktor erzeugten elektromagnetischen Wechselfeldes dienenden Suszeptor, wobei die Induktor-Aufnahme unterschiedliche Verlegemuster des Induktors erlaubt.

Aus der DE 10 2019 109 136 A1 ist eine Vorrichtung zur Herstellung von endkonturnahen, dreidimensionalen Vorformlingen bekannt, umfassend einen dreidimensionalen Grundkörper für einen Ablegevorgang von mindestens einem bereitgestellten vorbehandelten Tape oder von mindestens einem bereitgestellten Erzeugnis, welches mindestens ein vorbehandeltes Tape umfasst, wobei das Tape zumindest ein Matrixsystem und zumindest eine Faser umfasst.

Aus der DE 20 2015 100 080 U1 ist eine Induktionsheizvorrichtung bekannt, umfassend einen Träger und eine Spulenvorrichtung, welche an dem Träger angeordnet ist.

Aus der US 5,683,608 A ist ein Pressformelement zur Verwendung in einer Induktionsheizungsvorrichtung bekannt.

Der Erfindung liegt die Aufgabe zugrunde, eine Werkzeugvorrichtung der eingangs genannten Art bereitzustellen, mit der sich auf einfache Weise Verbundwerkstoff-Bauteile herstellen lassen.

Diese Aufgabe wird bei der eingangs genannten Werkzeugvorrichtung erfindungsgemäß dadurch gelöst, dass ein Stempel als Gegenelement für das Formwerkzeug vorgesehen ist, wobei die Heizmatte in den Stempel integriert ist.

Mindestens in dem Teilbereich des Formwerkzeugs, welcher aus dem elektrisch leitfähigen Material hergestellt ist, lässt sich durch die induktive Heizmatte über die Induktion von Wirbelströmen und den entsprechenden Wirbelstromverlusten eine induktive Heizung durchführen. Es lässt sich so über die Induktionsheizvorrichtung das Formwerkzeug berührungslos heizen.

Das Formwerkzeug muss dazu nicht besonders ausgestaltet sein. Beispielsweise müssen dazu in dieses keine Heizpatronen integriert werden oder dergleichen.

Durch die Induktionsheizvorrichtung lässt sich oberflächennah an dem Formwerkzeug und damit an einem Anlagebereich für das Werkstück eine Beheizung durchführen.

Das elektrisch leitfähige Material weist insbesondere eine elektrische Leitfähigkeit (bei 25°C) von mindestens 10³ S/m, vorzugsweise von mindestens 10⁴ S/m, vorzugsweise von mindestens 10⁵ S/m und vorzugsweise von mindestens 0,5 · 10⁶ S/m (metallische elektrische Leitfähigkeit) auf. Es ist ein Metall oder anderes Material mit entsprechender elektrischer Leitfähigkeit wie Graphit oder beispielsweise mit leitenden Fasern versehen.

Bei einer Ausführungsform ist das Formwerkzeug vollständig aus dem elektrisch leitfähigen Material hergestellt, oder es weist einen Teilbereich aus dem elektrisch leitfähigen Material auf, welcher so angeordnet und ausgebildet ist, dass über eine Beheizung dieses Teilbereichs durch die Induktionsheizvorrichtung das Werkstück beheizbar ist, wobei insbesondere dieser Teilbereich an dem Anlagebereich für das Werkstück angeordnet oder gebildet ist. Es lässt sich dann berührungslos über die induktive Heizmatte über Wirbelstromheizung das Werkstück wärmebeaufschlagen.

Es kann dabei vorgesehen sein, dass der Teilbereich aus einer Lage an elektrisch leitfähigem Material gebildet ist, welche fest mit einem Trägerbereich des Formwerkzeugs verbunden ist, oder auf dem Trägerbereich aufgelegt ist. Durch die Verwendung einer solchen Lage an elektrisch leitfähigem Material lässt sich eine Induktionsheizung erreichen, auch wenn der Rest des Formwerkzeugs nicht aus einem elektrisch leitfähigen Material ist. Die entsprechenden Wirbelströme sind dann auf diese Lage konzentriert.

Bei einer Ausführungsform ist die Lage aus elektrisch leitfähigem Material eine Beschichtung an dem Formwerkzeug. Diese Beschichtung ist beispielsweise durch galvanische Abscheidung hergestellt.

Günstig ist es, wenn die Heizmatte an eine Form des herzustellenden Bauteils angepasst ist. Dadurch ergibt sich eine optimierte Bauteilherstellung aus einem Werkstück.

Bei einer Ausführungsform weist die Induktionsheizvorrichtung eine Ohmsche Heizfunktion auf, und insbesondere ist über die Induktionsheizvorrichtung das Werkstück auch direkt beheizbar. Wenn beispielsweise die Heizmatte (mit einer Spulenanordnung) so betrieben wird, dass relativ große Ohmsche Verluste entstehen, dann erfolgt auch eine Ohmsche Erwärmung der Heizmatte. Dies kann zusätzlich zu einer Wärmebeaufschlagung des Werkstücks genutzt werden. Es ist beispielsweise so möglich, das Werkstück von der Seite des Formwerkzeugs her mit Wärme zu beaufschlagen, und auch von der Seite der Induktionsmatte her mit Wärme zu beaufschlagen.

Bei einer Ausführungsform ist mindestens ein Suszeptor zwischen dem Werkstück und der Heizmatte positioniert, wobei der mindestens eine Suszeptor für elektromagnetische Felder der Heizmatte derart durchlässig ist, dass das Formwerkzeug durch die Heizmatte beheizbar ist, und der Suszeptor durch die Heizmatte insbesondere induktiv beheizbar ist. Dadurch lässt sich zusätzlich von der Seite der Heizmatte her das Werkstück mit Wärme beaufschlagen. Der Suszeptor ist beispielsweise als Metallfolie ausgebildet. Er ist derart durchlässig für elektromagnetische Felder, dass durch ein Magnetfeld der induktiven Heizmatte Wirbelströme an dem Formwerkzeug induziert werden können. Ferner können Wirbelströme in dem Suszeptor induziert werden, so dass der Suszeptor induktiv aufgeheizt wird.

Es ist ein Stempel als Gegenelement für das Formwerkzeug vorgesehen, wobei die Heizmatte in den Stempel integriert ist. Es lässt sich so eine optimierte Formgebung erreichen.

Bei einer Ausführungsform ist die induktive Heizmatte eine Matte mit einer Spulenvorrichtung. Es können dadurch magnetische Felder induziert werden, welche Wechselströme induzieren. Die Spulenvorrichtung kann trägerfrei an der Matte angeordnet sein (und insbesondere diese ausbilden), oder sie kann an einem Träger angeordnet sein.

Günstig ist es, wenn die induktive Heizmatte mindestens eines der folgenden ist:
- biegeflexibel;
- biegeelastisch;
- biegeschlaff;
- formstabil;
- formstabil verformbar.

Es ergibt sich so eine optimierte Anpassbarkeit und insbesondere lassen sich Bauteile einer vorgegebenen Geometrie herstellen. Eine biegeschlaffe induktive Heizmatte kann beispielsweise vorteilhaft sein, wenn diese auf ein Werkstück in einer bestimmten Formgebung aufgelegt werden soll und sich dabei anpassen soll. Eine formstabile Ausbildung kann vorteilhaft sein, wenn beispielsweise ein Stempel als Gegenelement zu dem Formwerkzeug vorgesehen ist. Es kann dabei eine formstabile Verformbarkeit wie eine formstabile biegeflexible Ausbildung vorgesehen sein, um die induktive Heizmatte in eine bestimmte Form zu bringen, die dann erhalten bleibt.

Induktive Heizmatten sind beispielsweise in der DE 20 2015 100 080 U1 oder in der nicht vorveröffentlichten deutschen Gebrauchsmusteranmeldung Nr. 20 2018 103 385.9 vom 15. Juni 2018 des gleichen Anmelders beschrieben. Auf diese Dokumente wird ausdrücklich Bezug genommen.

Die Heizmatte umfasst eine Spulenvorrichtung.

Bei einer Ausführungsform umfasst die Heizmatte eine Spulenvorrichtung mit einer Mehrzahl von spiralförmigen Wicklungen, welche in Reihen und Spalten angeordnet sind. Insbesondere sind die spiralförmigen Wicklungen so ausgebildet, dass bei Stromdurchfluss der spiralförmigen Wicklungen eine Stromrichtung in benachbarten Randwicklungsabschnitten von in einer Reihe oder Spalte benachbarten spiralförmigen Wicklungen mindestens näherungsweise gleich ist.

Durch die entsprechende Ausbildung der spiralförmigen Wicklungen wird dafür gesorgt, dass am Zwischenbereich zwischen benachbarten spiralförmigen Wicklungen keine gegenseitige Auslöschung von elektromagnetischen Feldern erfolgt. Durch die geometrische Anordnung von Windungen der spiralförmigen Wicklungen über entsprechende Anordnung und Ausbildung der Randwicklungsabschnitte ist dafür gesorgt, dass in diesem Zwischenbereich der Strom an benachbarten spiralförmigen Wicklungen in die gleiche Richtung fließt und dadurch eine Feldabschwächung vermieden wird.

Ein Randwicklungsabschnitt ist dabei ein Abschnitt einer äußeren Windung.

Beispielsweise tritt beim Vorsehen einer einzigen spiralförmigen Wicklung eine stark inhomogene Energiedichteverteilung auf. Durch das Vorsehen einer Mehrzahl von spiralförmigen Wicklungen mit der erfindungsgemäßen Ausbildung erhält man im Betrieb bei Stromdurchfluss eine Homogenisierung der Energiedichteverteilung, wodurch wiederum eine homogene Erwärmung von Bauteilen realisierbar ist.

Bezogen auf die Fläche des Trägers, an welchem spiralförmige Wicklungen angeordnet sind, lässt sich dadurch eine homogene Erwärmung realisieren.

Die spiralförmigen Wicklungen an dem Träger bilden gewissermaßen Inseln, wobei die Inseln so gewickelt sind, dass eine Feldauslöschung im Zwischenbereich zwischen benachbarten spiralförmigen Wicklungen vermieden ist.

Grundsätzlich lässt sich die entsprechende Induktionsheizvorrichtung bezüglich der Fläche beliebig erweitern.

Insbesondere ist es vorgesehen, dass eine erste spiralförmige Wicklung einen ersten Randwicklungsabschnitt aufweist und eine zweite spiralförmige Wicklung einen zweiten Randwicklungsabschnitt aufweist, wobei die erste spiralförmige Wicklung und die zweite spiralförmige Wicklung benachbart sind und wobei der erste Randwicklungsabschnitt und der zweite Randwicklungsabschnitt benachbart sind, und wobei bei Stromfluss die Stromrichtung in dem ersten Randwicklungsabschnitt und dem zweiten Randwicklungsabschnitt mindestens näherungsweise gleich ist. Dadurch wird in dem Zwischenbereich zwischen der benachbarten ersten spiralförmigen Wicklung und der zweiten spiralförmigen Wicklung eine Feldauslöschung vermieden. Dies wiederum ermöglicht eine homogene Erwärmung eines Bauteils, welches mit der entsprechenden Induktionsheizvorrichtung beheizt wird.

Aus dem gleichen Grund ist es günstig, wenn bei Stromdurchfluss in benachbarten Randwicklungsabschnitten von benachbarten spiralförmigen Wicklungen sowohl in einer Reihe als auch in einer Spalte mindestens näherungsweise die gleiche Stromrichtung vorliegt. Dadurch wird in den Zwischenbereichen zwischen benachbarten spiralförmigen Wicklungen auf einer zweidimensionalen Fläche eine Feldauslöschung in Zwischenbereichen vermieden.

Es kann vorgesehen sein, dass benachbarte spiralförmige Wicklungen beabstandet sind oder einander überlappen, je nach Anwendungsfall.

Wenn benachbarte spiralförmige Wicklungen beabstandet sind, dann sind auch entsprechende benachbarte Randwicklungsabschnitte beabstandet. Wenn benachbarte spiralförmige Wicklungen einander überlappen, dann kann es vorgesehen sein, dass benachbarte Randwicklungsabschnitte sich in einer Projektion auf den Träger kreuzen.

Für eine homogene Energiedichteverteilung ist es günstig, wenn die spiralförmigen Wicklungen bezüglich der Spalten und Reihen in einem zweidimensionalen Gitter an dem Träger angeordnet sind. Dadurch lässt sich eine homogene Bedeckung des Trägers erreichen, wodurch wiederum eine homogene Energiedichteverteilung realisierbar ist.

Es ist insbesondere vorteilhaft, wenn das Gitter ein Rechteckgitter und vorteilhafterweise Quadratgitter ist, um eine homogene Energiedichteverteilung und dadurch homogene Erwärmbarkeit eines Bauteils zu erreichen.

Günstig ist es, wenn spiralförmige Wicklungen mindestens eines gleichen Typs bezüglich einer äußeren Einhüllenden gleich ausgebildet sind. Dadurch lässt sich eine hohe Homogenität erreichen.

Aus dem gleichen Grund ist es günstig, wenn spiralförmige Wicklungen mindestens eines gleichen Typs bezüglich der Anzahl an Windungen gleich ausgebildet sind.

Es hat sich als günstig erwiesen, wenn eine spiralförmige Wicklung mindestens zwei Windungen und insbesondere mindestens drei Windungen aufweist.

Es hat sich ebenfalls als günstig erwiesen, um eine gleichmäßige Erwärmbarkeit zu realisieren, wenn eine spiralförmige Wicklung höchstens acht Windungen und insbesondere höchstens sieben Windungen aufweist.

Günstig ist es, wenn die Spulenvorrichtung einen ersten Typ von spiralförmigen Wicklungen umfasst, bei welchem Windungen von einer Ausgangsstelle weg nach außen mit zunehmendem Abstand von der Ausgangsstelle verlaufen, und einen zweiten Typ umfassen, bei welchem Windungen zu einer Ausgangsstelle hin von außen nach innen mit abnehmendem Abstand zu der Ausgangsstelle verlaufen. Die entsprechende Richtung (nach außen oder nach innen) kann dabei auf den Stromfluss bezogen werden. Durch das Vorsehen von zwei unterschiedlichen Typen an spiralförmigen Wicklungen kann auf einfache Weise realisiert werden, dass der Stromfluss in Randwicklungsabschnitten von benachbarten spiralförmigen Wicklungen näherungsweise die gleiche Richtung hat.

Es ist dann besonders vorteilhaft, wenn in den Reihen und Spalten spiralförmige Wicklungen vom ersten Typ und vom zweiten Typ alternierend angeordnet sind. Dadurch kann auf einfache Weise erreicht werden, dass sowohl in den Reihen als auch in den Spalten die Randwicklungsabschnitte von benachbarten spiralförmigen Wicklungen einen Strom mit mindestens näherungsweise der gleichen Stromrichtung tragen. Dadurch wiederum wird eine Feldauslöschung in den entsprechenden Bereichen vermieden.

Günstigerweise ist ein Drehsinn eines elektrischen Stroms innerhalb einer spiralförmigen Wicklung gleichsinnig und die Drehsinne in benachbarten spiralförmigen Wicklungen sind entgegengesetzt. Dadurch lässt es sich auf einfache Weise erreichen, dass benachbarte Randwicklungsabschnitte von benachbarten spiralförmigen Wicklungen Ströme tragen, deren Richtung mindestens näherungsweise gleich ist.

Eine spiralförmige Wicklung zeichnet sich dadurch aus, dass ausgehend von einem Punkt (Ausgangsstelle) bzw. einer Achse der Abstand zunimmt oder abnimmt. Grundsätzlich kann diese Zunahme bzw. Abnahme monoton sein. Es ist auch möglich, dass die entsprechende spiralförmige Wicklung über mindestens näherungsweise gerade Windungsabschnitte gebildet ist. Dadurch ist die Zunahme bzw. die Abnahme nicht monoton, sondern es liegt nur abschnittsweise eine Zunahme bzw. Abnahme vor. Eine solche spiralförmige Wicklung mit geraden Windungsabschnitten lässt sich auf einfache Weise herstellen.

Es ist dann günstig, wenn benachbarte Randwicklungsabschnitte benachbarter spiralförmiger Wicklungen mindestens näherungsweise parallel zueinander orientiert sind. Es lässt sich dadurch auf einfache Weise erreichen, dass in diesen benachbarten Randwicklungsabschnitten mindestens näherungsweise die gleiche Stromrichtung vorliegt.

Es ist vorgesehen, dass eine Mehrzahl von spiralförmigen Wicklungen elektrisch in Reihe geschaltet sind. Insbesondere sind benachbarte spiralförmige Wicklungen elektrisch in Reihe geschaltet. Dadurch lässt sich auf einfache Weise erreichen, dass der Stromfluss in benachbarten Randwicklungsabschnitten die gleiche Stromrichtung aufweist.

Beispielsweise sind die spiralförmigen Wicklungen in einer Reihe oder in einer Spalte elektrisch in Reihe geschaltet, und entsprechend sind dann Reihen oder Spalten spiralförmiger Wicklungen elektrisch in Reihe geschaltet. Es ergibt sich dadurch bezüglich einer Hauptstromrichtung ein mäanderförmiger Verlauf des Stromflusses.

Es kann vorgesehen sein, dass eine elektrische Verbindung zwischen benachbarten spiralförmigen Wicklungen innerhalb einer Reihe oder Spalte über Randwicklungsabschnitte erfolgt, oder über eine Verbindung zwischen Ausgangsstellen für Windung einer spiralförmigen Wicklung erfolgt. Es ist dadurch möglich, spiralförmige Wicklungen mit einer "Einwärtsorientierung" und einer "Auswärtsorientierung" zu verbinden. Dies wiederum ermöglicht unterschiedliche Drehsinne für den Stromfluss innerhalb benachbarter spiralförmiger Wicklungen. Dadurch wiederum ist es auf einfache Weise möglich, in benachbarten Randwicklungsabschnitten benachbarter spiralförmiger Wicklungen mindestens näherungsweise die gleiche Stromrichtung zu realisieren.

Insbesondere erfolgt innerhalb einer Reihe oder einer Spalte die elektrische Verbindung zwischen Randwicklungsabschnitten und Ausgangsstellen alternierend. Dadurch lässt sich ein alternierender Drehsinn für den Strom erreichen. Es wird dadurch eine homogene Energiedichte realisiert.

Günstigerweise erfolgt eine elektrische Verbindung zwischen benachbarten Reihen oder Spalten über einen Randwicklungsabschnitt und eine Ausgangsstelle für Windungen benachbarter spiralförmiger Wicklungen. Dadurch lässt sich auf einfache Weise eine elektrische Verbindung zwischen benachbarten Reihen bzw. Spalten erreichen.

Günstig ist es, wenn die Spulenvorrichtung eine oder mehrere Flachspulen umfasst. Dadurch lässt sich auf einfache Weise eine Flächeninduktionsheizvorrichtung realisieren.

Bei einem Ausführungsbeispiel ist die Spulenvorrichtung durch mindestens eine Hochfrequenzlitze gebildet. Es lässt sich dadurch auf einfache Weise eine Spulenvorrichtung realisieren, welche an einem Träger angeordnet ist.

Günstig ist es, wenn die mindestens eine Hochfrequenzlitze über einen oder mehrere Haltefäden an einem Träger gehalten ist. Die mindestens eine Hochfrequenzlitze lässt sich dadurch in der entsprechenden Form gelegt auf einfache Weise an dem Träger fixieren. Es lässt sich dadurch ein flexibler Träger mit flexibler Hochfrequenzlitze realisieren. Es lässt sich eine Induktionsheizvorrichtung insbesondere als Flächenheizvorrichtung realisieren, welche biegeflexibel ist. Dadurch können beispielsweise gekrümmte Bauteile geheizt werden bzw. eine entsprechende Heizmatte lässt sich in ein gekrümmtes Werkzeug integrieren.

Insbesondere ist es vorgesehen, dass der Träger ein Maschennetz ist und die mindestens eine Hochfrequenzlitze mit dem Maschennetz vernäht ist. Dadurch lässt sich auf einfache Weise eine Hochfrequenzlitze in einer definierten geometrischen Lage mit den spiralförmigen Wicklungen mit dem Träger verbinden.

Erfindungsgemäß wird ein Verfahren zur Herstellung eines Bauteils aus einem Verbundwerkstoff mittels eines Formwerkzeugs bereitgestellt, bei dem ein Werkstück an dem Formwerkzeug an einem Anlagebereich des Formwerkzeugs angelegt wird, und mindestens ein Teilbereich des Anlagebereichs des Formwerkzeugs durch eine induktive Heizmatte berührungslos beheizt wird, wobei das Werkstück zwischen dem Anlagebereich und der Heizmatte positioniert wird, und wobei ein Stempel als Gegenelement für das Formwerkzeug verwendet wird, wobei die Heizmatte in den Stempel integriert ist.

Das erfindungsgemäße Verfahren weist die bereits im Zusammenhang mit der erfindungsgemäßen Werkzeugvorrichtung erläuterten Vorteile auf.

Weitere vorteilhafte Ausgestaltungen des erfindungsgemäßen Verfahrens wurden bereits im Zusammenhang mit der erfindungsgemäßen Werkzeugvorrichtung erläutert.

Insbesondere lässt sich das erfindungsgemäße Verfahren an der erfindungsgemäßen Werkzeugvorrichtung durchführen, bzw. die erfindungsgemäße Werkzeugvorrichtung lässt sich mit dem erfindungsgemäßen Verfahren betreiben.

Günstig ist es dabei, wenn die Heizmatte selber durch Ohmsche Wärme aufgeheizt wird und über Ohmsche Wärme das Werkstück beheizt. Dadurch lässt sich das Werkstück von zwei Seiten her, nämlich von der Seite des Formwerkzeugs her und von der Seite der Heizmatte her beheizen. Alternativ oder zusätzlich ist es günstig, wenn zwischen der Heizmatte und dem Werkstück ein Suszeptor positioniert wird, welcher für elektromagnetische Felder der Heizmatte derart durchlässig ist, dass das Formwerkzeug durch die Heizmatte (induktiv) beheizt wird, und der Suszeptor von der Heizmatte (insbesondere induktiv) beheizt wird. Dadurch lässt sich ebenfalls von der Seite der Heizmatte her eine Beheizung des Werkstücks erreichen.

Ganz besonders vorteilhaft ist es, wenn die Heizmatte an eine Werkstückform und insbesondere an eine Form eines herzustellenden Bauteils angepasst ist oder anpassbar ist. Dadurch ergeben sich umfangreiche Einsatzmöglichkeiten. Die nachfolgende Beschreibung bevorzugter Ausführungsformen dient im Zusammenhang mit den Zeichnungen der näheren Erläuterung der Erfindung. Es zeigen:
- Figur 1: eine schematische Darstellung eines Beispiels einer Werkzeugvorrichtung zur Herstellung eines Verbundwerkstoff-Bauteils;
- Figur 2: eine Draufsicht auf ein Ausführungsbeispiel einer Heizmatte einer Induktionsheizvorrichtung;
- Figur 3: eine schematische Darstellung eines Ausführungsbeispiels einer Induktionsheizvorrichtung mit einer Spulenvorrichtung der Heizmatte gemäß Figur 2;
- Figur 4: eine schematische Darstellung eines weiteren Beispiels
- Figur 5: einer Werkzeugvorrichtung; eine schematische Darstellung eines weiteren Beispiels
- Figur 6: einer Werkzeugvorrichtung; und eine schematische Darstellung eines erfindungsgemäßen Ausführungsbeispiels einer Werkzeugvorrichtung.

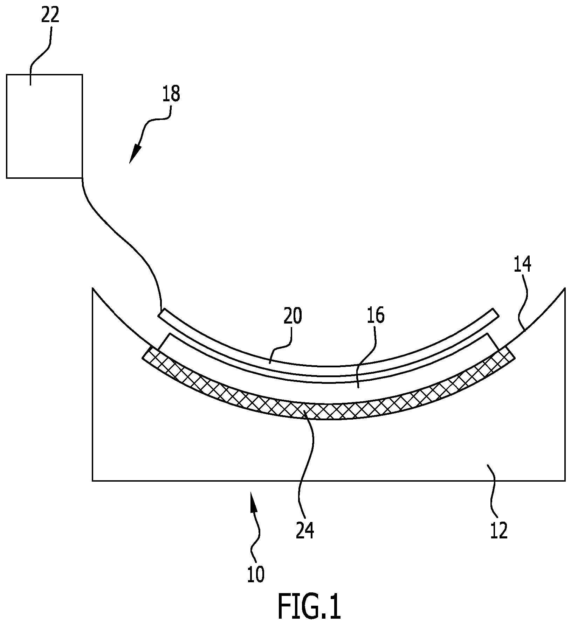

Ein Beispiel einer Werkzeugvorrichtung, welches in Figur 1 schematisch gezeigt und mit 10 bezeichnet ist, umfasst ein Formwerkzeug 12. Das Formwerkzeug 12 hat einen Anlagebereich 14 für ein Werkstück 16. Aus dem Werkstück 16 wird ein Verbundwerkstoff-Bauteil wie beispielsweise ein Faserverbundwerkstoff-Bauteil hergestellt.

Der Anlagebereich 14 ist in seiner Form an ein herzustellendes Bauteil angepasst. In Figur 1 ist der Anlagebereich 14 in einer gekrümmten Form gezeigt.

Das Formwerkzeug 12 ist bei einer Ausführungsform aus einem elektrisch leitfähigen Material wie einem metallischen Werkstoff hergestellt und insbesondere vollständig aus einem metallischen Werkstoff hergestellt. Der Werkstoff kann beispielsweise auch nichtmetallisch sein und elektrisch leitende Fasern wie Kohlenstoffasern zur Bereitstellung einer elektrischen Leitfähigkeit von insbesondere mindestens 10⁴ S/m und vorzugsweise von mindestens 0,5 · 10⁶ S/m umfassen.

Es ist eine Induktionsheizvorrichtung 18 vorgesehen. Diese umfasst eine induktive Heizmatte 20 und eine Hochfrequenzquelleneinrichtung 22.

Ausführungsbeispiele einer Induktionsheizvorrichtung 18 und insbesondere einer induktiven Heizmatte 20 werden untenstehend näher beschrieben.

Das Werkstück 16 wird an dem Anlagebereich 14 des Formwerkzeugs 12 angelegt. Das Werkstück 16 wird dabei zwischen der induktiven Heizmatte 20 und dem Formwerkzeug 12 positioniert; die induktive Heizmatte 20 ist beabstandet zu dem Formwerkzeug 12 und dadurch auch beabstandet zu dem Anlagebereich 14 des Formwerkzeugs 12.

Um ein Bauteil aus einem Verbundwerkstoff herzustellen, wird als Werkstück 16 beispielsweise eine Struktur von Prepreg-Lagen verwendet. Dies sind Gewebelagen, welche mit Harz imprägniert sind. Durch Erhitzen des Werkstücks 16 lässt sich das Harz aushärten.

Erfindungsgemäß ist es vorgesehen, dass über die induktive Heizmatte 20 berührungslos das Formwerkzeug 12 beheizt wird. Durch die induktive Heizmatte 20, wenn diese entsprechend mit einem Wechselstrom beaufschlagt wird, heizt sich ein Heizbereich 24 des Formwerkzeugs 12 auf. Dieser Heizbereich 24 liegt insbesondere an dem Anlagebereich 14. Die induktive Heizmatte 20, wenn sie mit einem entsprechenden Wechselstrom durchflossen wird, erzeugt ein magnetisches Wechselfeld, welches in dem Formwerkzeug 12 und dabei insbesondere in dem Heizbereich 24 Wirbelströme erzeugt. Die Wirbelstromverluste führen zu einer Aufheizung an dem Heizbereich 24 und damit dem Anlagebereich 14. Dadurch wiederum lässt sich das Werkstück 16, welches an dem Anlagebereich 14 anliegt, aufheizen.

Die induktive Heizmatte 20 heizt beabstandet zu dem Werkzeug 12 dieses an dem Heizbereich 24 auf.

Es kann zusätzlich auch vorgesehen werden, dass durch den Stromfluss in der induktiven Heizmatte 20 diese sich aufgrund Ohmscher Verluste erwärmt. Wenn die Heizmatte 20 auf dem Werkstück 16 aufliegt, oder über eine wärmeleitende Lage mit dem Werkstück 16 verbunden ist, dann kann über die Heizmatte 20 auch direkt das Werkstück 16 aufgeheizt werden. Bei einer solchen Ausführungsform wird das Werkstück 16 von zwei Seiten her beheizt, nämlich von dem Heizbereich 24 her (wobei die dortigen Wirbelströme durch die induktive Heizmatte 20 verursacht werden), und von einer Ohmschen Erwärmung der induktiven Heizmatte 20 an einer gegenüberliegenden Seite.

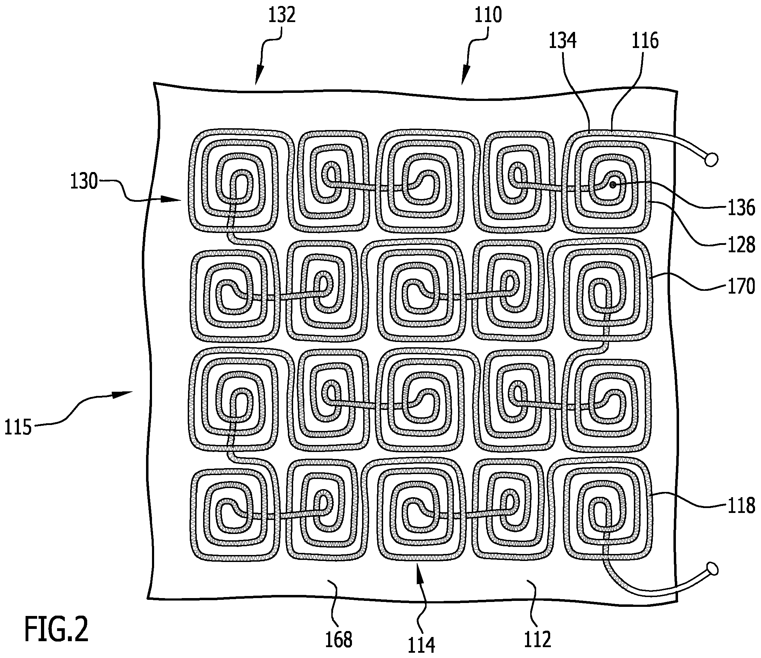

Ein Ausführungsbeispiel einer Induktionsheizvorrichtung, welches in Figur 2 in einer Draufsicht gezeigt ist und dort mit 110 bezeichnet ist, umfasst einen Träger 112. Dieser Träger 112 ist als Maschennetz ausgebildet.

Die entsprechende Induktionsheizvorrichtung ist in der DE 20 2015 100 080 U1 beschrieben. Auf dieses Dokument wird vollinhaltlich Bezug genommen.

Das Maschennetz 112 ist beispielsweise ein textiles Gebilde, wie ein Gewebe oder Gewirke.

Das Maschennetz 112 umfasst Maschen mit Stegen, welche insbesondere rechteckförmig oder quadratisch sind. Die Stege sind beispielsweise durch ein Fadenmaterial hergestellt.

Der Träger 112 mit dem Maschennetz ist als Ganzes biegbar.

An dem Träger 112 ist eine Spulenvorrichtung 114 angeordnet. Die Spulenvorrichtung ist durch eine stromtragende Hochfrequenzlitze 116 gebildet. Dadurch ist eine induktive Heizmatte 115 entsprechend der Heizmatte 20 gebildet.

Die Hochfrequenzlitze 116 dient zum Tragen eines hochfrequenten Wechselstroms. Die Hochfrequenzlitze 116 ist ein Drahtbündel von Einzeldrähten, welche jeweils durch eine Isolierung gegeneinander elektrisch isoliert sind. Es lässt sich dadurch effektiv eine Vergrößerung des am Stromfluss beteiligten Querschnitts im Vergleich zu einem Volldraht erreichen, wobei der Einfluss des Skin-Effekts reduziert ist. Ferner wird die Ladungsträger-Verdrängung an eine Seite des entsprechenden Leiters durch das Magnetfeld einer daraus hergestellten Spule verringert (Proximity-Effekt).

Das Drahtbündel ist bei einer Ausführungsform in einer Umhüllung 118 angeordnet, welche insbesondere mehrlagig ist.

Bezüglich weiterer Details der Ausbildung der Hochfrequenzlitze 116 wird auf die DE 10 2013 111 266 A1 verwiesen. Auf dieses Dokument wird ausdrücklich und vollinhaltlich Bezug genommen.

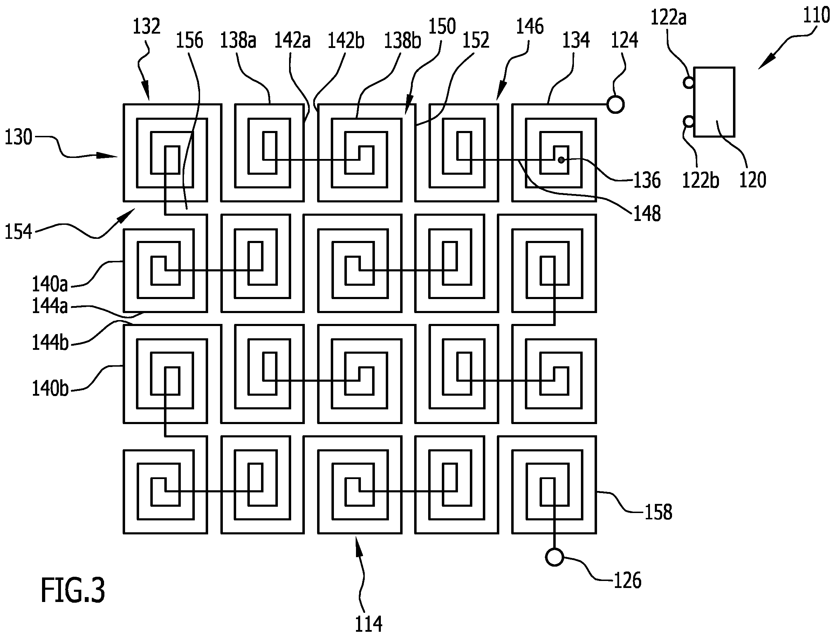

Der Spulenvorrichtung 114 ist eine Hochfrequenzquelleneinrichtung 120 (vergleiche Figur 3) zugeordnet. Die Einzeldrähte des Drahtbündels der Hochfrequenzlitze 116 sind beim Betrieb der Induktionsheizvorrichtung 110 mit entsprechenden Anschlüssen 122a, 122b der Hochfrequenzquelleneinrichtung 120 elektrisch wirksam verbunden.

Die Hochfrequenzlitze 116 weist dazu an einem ersten Ende einen Anschluss 124 und an einem zweiten Ende einen Anschluss 126 auf.

Die Hochfrequenzquelleneinrichtung 120 dient zur Erzeugung eines hochfrequenten elektromagnetischen Wechselfelds, mit welchem die Hochfrequenzlitze 116 beaufschlagt wird. Die Frequenz liegt bei mindestens 20 kHz und liegt typischerweise bei ca. 150 kHz.

Die Hochfrequenzquelleneinrichtung 120 umfasst eine elektronische Schalteinrichtung zur Erzeugung des entsprechenden Wechselfelds, wenn die primäre elektrische Quelle eine Gleichstromquelle ist.

Die Hochfrequenzlitze 116 ist ein linearbiegeflexibles Kabel.

Die Spulenvorrichtung 114 umfasst eine Mehrzahl von spiralförmigen Wicklungen 128. Diese spiralförmigen Wicklungen 128 sind an dem Träger 112 in Reihen 130 und Spalten 132 angeordnet. Zur Ausbildung einer Flächeninduktionsheizvorrichtung 110 sind die spiralförmigen Wicklungen 128 an dem Träger 112 gleichmäßig verteilt angeordnet. Die spiralförmigen Wicklungen 128 sind an der Hochfrequenzlitze 116 ausgebildet.

Insbesondere sind die spiralförmigen Wicklungen 128 durch die Reihen 130 und Spalten 132 an dem Träger 112 in einem zweidimensionalen Gitter angeordnet. Dieses zweidimensionale Gitter ist insbesondere ein Rechteckgitter und vorzugsweise ein Quadratgitter.

Eine jeweilige spiralförmige Wicklung 128 weist eine Mehrzahl von Windungen 134 auf, welche auf eine Ausgangsstelle 136 bezogen sind. Eine Ausgangsstelle 136 liegt auf einer Windungsachse der Windungen 134 der spiralförmigen Wicklung 128. Die Windungsachse ist senkrecht zum Träger 112 orientiert. Die Spirale einer spiralförmigen Wicklung 128 ist als Kurve definiert, welche sich von der Ausgangsstelle 136 bzw. der Windungsachse entfernt bzw. annähert. Die Entfernung kann dabei monoton zunehmend sein bzw. die Annäherung kann monoton abnehmend sein, oder sie kann abschnittsweise zunehmend bzw. abnehmend sein.

Die Anordnung der spiralförmigen Wicklungen 128 an dem Träger 112 bestimmt die Temperaturverteilung an einem zu erwärmenden Gegenstand.

Die Spulenvorrichtung **114** ist so ausgebildet, dass über die Fläche der Spulenvorrichtung **114** eine homogene Feldverteilung erreicht wird und insbesondere im Bereich zwischen benachbarten spiralförmigen Wicklungen 128 eine "Feldauslöschung" der erzeugten magnetischen Felder vermieden wird.

Bei Stromdurchfluss einer spiralförmigen Wicklung 128 ist innerhalb einer spiralförmigen Wicklung 128 der Drehsinn des durchfließenden Stroms gleichsinnig. Erfindungsgemäß ist es vorgesehen, dass sowohl für Reihen 130 als auch für Spalten 132 der Drehsinn für den Stromdurchfluss in benachbarten spiralförmigen Wicklungen 138a, 138b bzw. 140a, 140b entgegengerichtet ist. Dadurch lässt sich die beschriebene Auslöschung des elektromagnetischen Felds vermeiden.

Die spiralförmigen Wicklungen 128 der Spulenvorrichtung 114 sind elektrisch in Reihe geschaltet. Bei dem gezeigten Ausführungsbeispiel (Figuren 2, 3) sind die spiralförmigen Wicklungen 128 in einer Reihe 130 hintereinander seriell geschaltet. Die entsprechenden Reihen 130 sind wiederum seriell geschaltet.

Die Spulenvorrichtung 114 umfasst zwei Typen an spiralförmigen Wicklungen 128, nämlich einen ersten Typ, bei dem entsprechende Windungen 134 von der jeweiligen Ausgangsstelle 136 nach außen mit zunehmendem Abstand (zumindest abschnittsweise) von der Ausgangsstelle 136 verlaufen. In Figur 3 sind die spiralförmigen Wicklungen 138a und 140a vom ersten Typ.

Bei den spiralförmigen Wicklungen 128 eines zweiten Typs laufen die entsprechenden Windungen 134 zu der Ausgangsstelle 136 von außen nach innen mit abnehmendem Abstand (zumindest abschnittsweise) von der Ausgangsstelle 136. Bei dem Ausführungsbeispiel gemäß Figur 3 sind die spiralförmigen Wicklungen 138b und 140b vom zweiten Typ.

Die entsprechende Windungsrichtung des ersten Typs und des zweiten Typs ist dabei bezogen auf den entsprechenden Stromfluss.

In einer Reihe 130 sind die spiralförmigen Windungen 128 vom ersten Typ und zweiten Typ alternierend angeordnet.

Innerhalb einer Spalte 132 sind die spiralförmigen Wicklungen 128 vom ersten Typ und zweiten Typ ebenfalls alternierend angeordnet.

Es ergibt sich dadurch sowohl innerhalb einer Reihe 130 als auch innerhalb einer Spalte 132 bezüglich benachbarter spiralförmiger Wicklungen 128 bei Stromdurchfluss alternierend ein entgegengesetzter Drehsinn für den Strom.

Die jeweiligen spiralförmigen Wicklungen 128 weisen zu benachbarten spiralförmigen Wicklungen hin Randwicklungsabschnitte auf. Beispielsweise hat die spiralförmige Wicklung 138a einen Randwicklungsabschnitt 142a, welcher einem entsprechenden Randwicklungsabschnitt 142b der spiralförmigen Wicklung 138b benachbart ist.

Die Randwicklungsabschnitte 142a und 142b sind dabei so angeordnet, dass bei Stromdurchfluss der Spulenvorrichtung 114 die Stromrichtung in ihnen mindestens näherungsweise gleich ist.

Dadurch wird in dem entsprechenden Bereich eine "Auslöschung" der entstehenden elektromagnetischen Felder verhindert.

Entsprechend sind auch Randwicklungsabschnitte 144a, 144b von in einer Spalte 132 benachbarten spiralförmigen Wicklungen 140a, 140b so angeordnet, dass der Stromfluss in ihnen mindestens näherungsweise in gleicher Richtung erfolgt.

Die Anordnung der Randwicklungsabschnitte 142a, 142b, 144a, 144b wird durch entsprechende Anordnung von spiralförmigen Wicklungen 128 des ersten Typs und des zweiten Typs erreicht, welche sowohl in den Reihen 130 als auch in den Spalten 132 alternierend ist.

Zur Herstellung der Reihenschaltung der spiralförmigen Wicklung 128 sind innerhalb einer Reihe 130 benachbarte spiralförmige Wicklungen 128 elektrisch miteinander verbunden. Innerhalb einer Reihe 130 ist ein erster Verbindungstyp 146 vorgesehen, bei welchem Ausgangsstellen 136 benachbarter spiralförmiger Wicklungen 128 miteinander verbunden sind (durch einen entsprechenden Abschnitt 148 der Hochfrequenzlitze 116).

Bei einem zweiten Verbindungstyp 150 erfolgt die Verbindung zwischen benachbarten spiralförmigen Wicklungen 128 über einen Randwicklungsabschnitt 152.

Innerhalb einer Reihe 130 folgen der erste Verbindungstyp 146 und der zweite Verbindungstyp 150 zwischen benachbarten spiralförmigen Wicklungen 8 alternierend aufeinander.

Zur elektrischen Verbindung zwischen benachbarten Reihen 130 ist ein dritter elektrischer Verbindungstyp 154 vorgesehen. Bei diesem erfolgt eine elektrische Verbindung zwischen einer Ausgangsstelle 136 und einem Randwicklungsabschnitt 156.

Die spiralförmigen Wicklungen 128 sind als Flachspulen an dem Träger 112 durch entsprechende "Legung" der Hochfrequenzlitze 116 angeordnet.

Bei einem Ausführungsbeispiel weisen die spiralförmigen Wicklungen 128 (Figuren 2, 3) gerade Abschnitte 158 auf. Dadurch ist die spiralförmige Wicklung 128 keine solche, welche sich monoton zunehmend von der entsprechenden Ausgangsstelle 136 entfernt bzw. monoton abnehmend annähert. Bezogen auf diese Abschnitte liegt jedoch eine abschnittsweise Entfernung bzw. Annäherung zu der entsprechenden Ausgangsstelle 136 vor.

Bei dem Ausführungsbeispiel von spiralförmigen Wicklungen 128 mit geraden Abschnitten 158 sind vorzugsweise benachbarte Randwicklungsabschnitte 142a, 142b bzw. 144a, 144b parallel zueinander orientiert. Dadurch ergibt sich eine parallele Stromrichtung dort.

Es ist grundsätzlich möglich, dass benachbarte spiralförmige Wicklungen beabstandet zueinander sind und ihre entsprechenden benachbarten Randwicklungsabschnitte beabstandet zueinander sind.

Die spiralförmigen Wicklungen 128 gemäß dem Ausführungsbeispiel der Figuren 2, 3 sind so angeordnet.

Es ist auch möglich, dass benachbarte spiralförmige Wicklungen einander überlappen und dadurch Windungen übereinander liegen. (Die Hochfrequenzlitze 116 ist nach außen isoliert.)

Es ist dabei möglich, dass Randwicklungsabschnitte, welche benachbart sind, einander (in der Projektion auf den Träger 112) überkreuzen.

Jede spiralförmige Wicklung 128 der Spulenvorrichtung 114 weist eine Mehrzahl von Windungen 134 auf. Vorzugsweise weist jede spiralförmige Wicklung 128 mindestens zwei und vorzugsweise mindestens drei Windungen 134 auf. Es ist ferner günstig, wenn jede spiralförmige Wicklung 128 höchstens acht und vorzugsweise höchstens sieben Windungen 134 aufweist.

Grundsätzlich ist es vorteilhaft, wenn die spiralförmigen Wicklungen 128 zumindest des gleichen Typs gleich ausgebildet sind bezüglich Windungszahl und äußerer Einhüllendenfläche.

Das Maschennetz hat eine erste Seite 168 und eine der ersten Seite gegenüberliegende zweite Seite. Die Hochfrequenzlitze 116 ist vorzugsweise ausschließlich oder zum größten Teil an der ersten Seite 168 angeordnet.

Die entsprechenden Windungsachsen der spiralförmigen Wicklungen 128 liegen quer und insbesondere senkrecht zu dem Träger 112.

Die Hochfrequenzlitze 116 ist über einen oder mehrere Haltefäden 170 an dem Träger 112 fixiert und insbesondere mit diesem vernäht. Durch diese Fixierung über Haltefäden 170 wird auch die Windungsstruktur der Spulenvorrichtung 114 an dem Träger 112 hergestellt.

Bezüglich der Fixierung über Haltefäden 170 der Spulenvorrichtung 114 an dem Maschennetz des Trägers 112 wird auf die DE 10 2013 111 266 A1 verwiesen.

Es kann vorgesehen sein, dass der Spulenvorrichtung 114 eine Magnetflusskonzentratorlage zugeordnet ist, welche insbesondere an derjenigen Seite des Trägers 112 angeordnet ist, welche abgewandt zu der ersten Seite 168 ist. Eine solche Magnetflusskonzentratorlage, welche aus einem Material mit entsprechender magnetischer Permeabilität hergestellt ist, dient dazu, den Magnetfluss, welcher beim Betrieb der Spulenvorrichtung 114 erzeugt wird, in ein Vorfeld vor der ersten Seite 168 zu konzentrieren.

Es können ferner äußere elektrische Isolatorlagen vorgesehen werden, zwischen welchen dann der Träger 112 mit daran fixierter Spulenvorrichtung 114 und gegebenenfalls die Magnetflusskonzentratorlage angeordnet ist. Solche äußeren elektrischen Isolierlagen sind beispielsweise aus einem Silikonmaterial hergestellt.

Die äußeren elektrischen Isolierlagen bzw. die Magnetflusskonzentratorlage sind flexibel ausgestaltet.

Der Träger 112 ist biegsam. Die Hochfrequenzlitze 116 ist mit dem Träger 112 biegbar. Die Verbindung der Hochfrequenzlitze 116 mit dem Träger 112 über den oder die Haltefäden 170 ermöglicht die Biegbarkeit. Der Träger 112 mit der Spulenvorrichtung 114 bildet eine flexible Heizmatte 172.

Die Induktionsheizvorrichtung 110 kann in unterschiedliche geometrische Formen gebracht werden. Es ist beispielsweise eine einfache Krümmung oder mehrfache Krümmung möglich.

Die Induktionsheizvorrichtung ist als Flächeninduktionsheizvorrichtung ausgebildet, bei welcher durch die Anordnung der spiralförmigen Wicklungen 128 Bereiche mit sich gegenseitig auslöschenden elektromagnetischen Feldern vermieden sind. Dadurch lässt sich bei hoher Flexibilität eine homogene Erwärmung erreichen.

Die spiralförmigen Wicklungen 128 auf dem Träger 112 bilden felderzeugende Inseln. Durch die entsprechende Ausbildung der Inseln lässt sich grundsätzlich die "Heizfläche" beliebig erweitern bzw. es lässt sich eine Größenanpassung durchführen. Dies wird dann durch entsprechende "Legung" der Hochfrequenzlitze 116 an dem Träger 112 erreicht.

Es ist auch möglich, dass die Induktionsheizvorrichtung als Heizmatte eine Spulenvorrichtung mit einer Mehrzahl von spiralförmigen Wicklungen umfasst, welche in Reihen und/oder Spalten angeordnet sind, wobei die mindestens eine Spulenvorrichtung durch ein Rohr gebildet ist, welche von einem Wärmeübertragungsmedium durchströmbar ist.

Das Rohr kann an einem Träger angeordnet sein, oder es kann eine trägerfreie Heizmatte und insbesondere flexible (auch formstabile flexible) Heizmatte durch das Rohr gebildet sein. Es wird in diesem Zusammenhang auf die deutsche Gebrauchsmusteranmeldung Nr. 20 2018 103 385.9 vom 15. Juni 2018 des gleichen Anmelders verwiesen.

Es ist grundsätzlich möglich, dass die entsprechende induktive Heizmatte 20 formstabil ausgebildet ist. Die Formstabilität kann dabei permanent sein oder sie kann variabel sein. Wenn beispielsweise die Spulenvorrichtung durch ein Rohr gebildet ist, kann die entsprechende Heizmatte auf einfache Weise formstabil ausgebildet sein.

Die Heizmatte kann flexibel bzw. biegbar ausgebildet sein. Sie kann dabei biegeschlaff ausgebildet sein, oder sie kann in der Art einer plastischen Verformbarkeit biegeflexibel ausgebildet sein. Wenn beispielsweise der Träger 112 entsprechend ausgebildet ist, lässt sich eine biegeflexible Ausbildung erreichen. In diesem Sinne kann die Heizmatte 20 auch biegeflexibel formstabil ausgebildet sein.

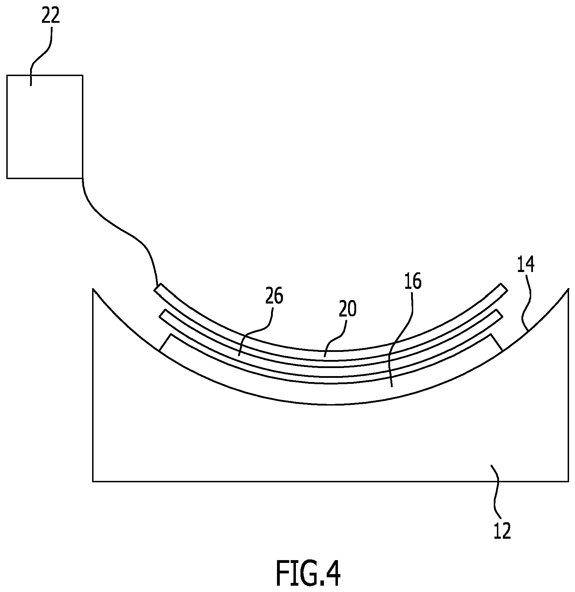

Ein weiteres Beispiel einer Werkzeugvorrichtung, welches schematisch in Figur 4 schematisch gezeigt ist, ist grundsätzlich gleich aufgebaut wie die Werkzeugvorrichtung 10 mit Formwerkzeug 12 und induktiver Heizmatte 20.

Bei dieser Ausführungsform ist mindestens ein Suszeptor 26 vorgesehen, welcher zwischen der induktiven Heizmatte 20 und dem Formwerkzeug 12 und dabei dem Anlagebereich 14 positioniert wird. Der Suszeptor 26 bildet eine entsprechende Zwischenlage zwischen der induktiven Heizmatte 20 und dem Werkstück 16.

Der (mindestens eine) Suszeptor 26 dient zur Unterstützung der Erwärmung. Der Suszeptor 26 ist beispielsweise als Metallblech oder Metallfolie ausgebildet. Er ist entsprechend auch an die Form des Werkstücks bzw. des herzustellenden Bauteils angepasst.

Der Suszeptor 26 ist dabei so ausgebildet, dass er für die elektromagnetischen Felder der induktiven Heizmatte 20 derart durchlässig ist, dass die induktive Heizmatte 20 den entsprechenden Heizbereich 24 an dem Formwerkzeug 12 induktiv aufheizen kann. Ferner ist der Suszeptor 26 so ausgebildet, dass in ihm auch Wirbelströme induziert werden können, so dass Wirbelstromverluste entstehen und dadurch auch von der Seite der induktiven Heizmatte 20 her über den Suszeptor 26 das Werkstück 16 induktiv beheizt werden kann.

Die induktive Heizmatte 20 heizt dadurch induktiv den Suszeptor 26 und das Formwerkzeug 12. Zusätzlich kann bei entsprechender Einstellung eines Betriebspunkts der Suszeptor 26 auch noch durch Ohmsche Verluste über die induktive Heizmatte 20 beheizt werden.

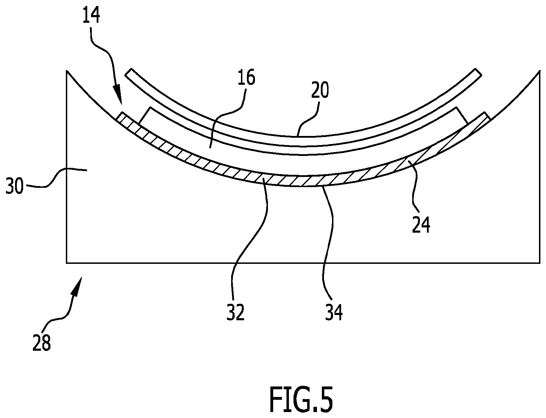

Bei einem weiteren Beispiel einer Werkzeugvorrichtung, welches in Figur 5 schematisch gezeigt und mit 28 bezeichnet ist, ist ein Formwerkzeug 30 aus einem elektrisch nicht leitfähigen Material wie einem nichtmetallischen Material vorgesehen. An dem Formwerkzeug 30 ist eine Lage 32 aus elektrisch leitfähigem wie einem metallischen Material angeordnet. Diese Lage 32 ist bei einer Ausführungsform eine Beschichtung aus einem metallischen Material, welche auf einem Trägerbereich 34 des Formwerkzeugs 30 aufgebracht ist. Beispielsweise ist eine entsprechende metallische Schicht galvanisch an den Trägerbereich 34 abgeschieden.

Bei einer alternativen Ausführungsform ist die Lage 32 aus elektrisch leitfähigem Material auf dem Formwerkzeug 30 aufgelegt; beispielsweise ist sie als metallische Folie aufgelegt.

Das Werkstück 16 ist auf der Lage 32 positioniert. Die Lage 32 bildet dadurch den Anlagebereich 14 des Formwerkzeugs 30.

Eine induktive Heizmatte 20 ist wie oben beschrieben beabstandet zu dem Formwerkzeug 30 einschließlich der Lage 32, d.h. die Heizmatte 20 ist beabstandet zu der Lage 32. Das Werkstück 16 ist zwischen der induktiven Heizmatte 20 und der Lage 32 positioniert.

Die induktive Heizmatte 20 erzeugt Wirbelströme in der Lage 32 aus elektrisch leitfähigem Material. In dem Formwerkzeug 30 außerhalb der Lage 32 werden keine Wirbelströme erzeugt.

Die Lage 32 bildet dadurch den Heizbereich 24.

Ansonsten funktioniert die Werkzeugvorrichtung 28 wie oben anhand der Werkzeugvorrichtung 10 beschrieben. Insbesondere können auch ein oder mehrere Suszeptorlagen bei der Werkzeugvorrichtung 28 verwendet werden.

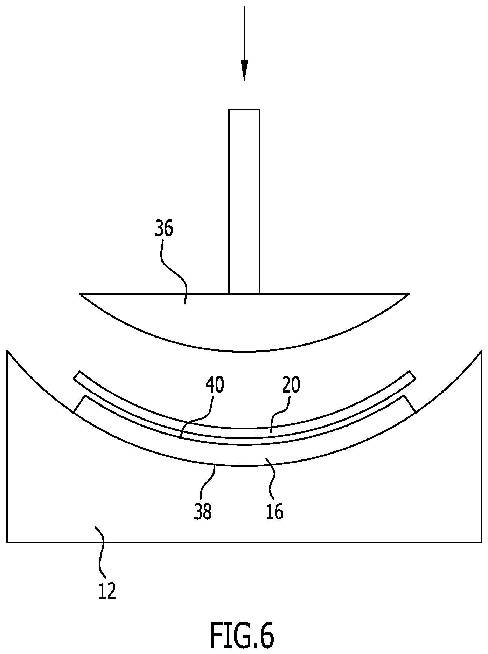

Ein erfindungsgemäßes Ausführungsbeispiel einer Werkzeugvorrichtung, welches in Figur 6 gezeigt ist, ist grundsätzlich gleich ausgebildet wie die Werkzeugvorrichtung 10. Für gleiche Elemente werden gleiche Bezugszeichen verwendet. Es ist ein Stempel 36 als Gegenelement zu dem entsprechenden Formwerkzeug 12 vorgesehen. Über das Formwerkzeug 12 lässt sich das Werkstück 16 an einer ersten Seite 38 formen. Über den Stempel 36 lässt es sich an einer zweiten gegenüberliegenden Seite 40 formen.

Die induktive Heizmatte 20 ist in den Stempel 36 integriert bzw. ist Teil des Stempels. Vorzugsweise ist dann der Stempel 36 nicht aus einem metallischen Material hergestellt bzw. ist in einem Bereich mit einem genügend großen Abstand zu der induktiven Heizmatte 20 aus metallischem Material hergestellt. Erfindungsgemäß wird eine Werkzeugvorrichtung bereitgestellt, bei der ein Heizbereich 24 beheizt wird, an welchem ein Werkstück 16 anliegt. Der Heizbereich 24 wird durch induktive Heizung über Wirbelstromverluste über eine induktive Heizmatte 20 beheizt.

Es lässt sich so beispielsweise auch nachträglich ein vorhandenes Formwerkzeug 12 beheizen, ohne dass Heizpatronen oder dergleichen in dieses integriert werden müssen.

Es lassen sich Bauteile aus Verbundwerkstoffen an einer entsprechenden Werkzeugvorrichtung 10 herstellen, ohne dass ein Autoklav verwendet werden muss.

Es lassen sich insbesondere flächige Bauteile an einem Formwerkzeug 12 herstellen.

Durch das Verwenden einer induktiven Heizmatte 20 lässt sich eine hohe Flexibilität bezüglich der Formgebung erreichen. Durch die induktive Aufheizung des Heizbereichs 24 wird erreicht, dass Wärme aus der Wärmequelle nicht nur über Wärmeleitung zu dem zu erwärmenden Bauteil gelangt.

Das Formwerkzeug 12 ist unabhängig von der Beheizung ausgestaltbar, da eine berührungslose Heizung über die beabstandete induktive Heizmatte 20 erfolgt. Es ist eine nachträgliche Verwendung der Induktionsheiztechnologie für ein Formwerkzeug 12 möglich.

Es ist eine oberflächennahe Heizung möglich.

Beispielsweise lassen sich auch bewegliche Werkstücke 16 auf einfache Weise aufheizen.

Durch die induktive Heizmatte 20 lässt sich angepasst an eine Größe eines herzustellenden Bauteils eine lokale und oberflächennahe Erwärmung an dem Formwerkzeug 12 erreichen.

Wenn die induktive Heizmatte 20 in einem entsprechenden Betriebspunkt betrieben wird, so lässt sich über einen Ohmschen Widerstand an der induktiven Heizmatte 20 und eine entsprechende Ohmsche Wärme zusätzlich noch ein Werkstück 16 beheizen.

Das herzustellende Bauteil kann vollständig ein Verbundwerkstoff-Bauteil sein, oder es kann auch ein Bauteil sein, welches eine Verbundwerkstoffkomponente enthält. Beispielsweise kann über eine erfindungsgemäße Werkzeugvorrichtung auch eine Fügung beispielsweise eines Metallteils mit einem Verbundwerkstoff-Bauteil erfolgen.

### Bezugszeichenliste

- 10: Werkzeugvorrichtung
- 12: Formwerkzeug
- 14: Anlagebereich
- 16: Werkstück
- 18: Induktionsheizvorrichtung
- 20: Induktive Heizmatte
- 22: Hochfrequenzquelleneinrichtung
- 24: Heizbereich
- 26: Suszeptor
- 28: Werkzeugvorrichtung
- 30: Formwerkzeug
- 32: Lage aus elektrisch leitfähigem Material
- 34: Trägerbereich
- 36: Stempel
- 38: erste Seite
- 40: zweite Seite
- 110: Induktionsheizvorrichtung
- 112: Träger
- 114: Spulenvorrichtung
- 115: Induktive Heizmatte
- 116: Hochfrequenzlitze
- 118: Umhüllung
- 120: Hochfrequenzquelleneinrichtung
- 122a: Anschluss
- 122b: Anschluss
- 124: Anschluss
- 126: Anschluss
- 128: Spiralförmige Wicklung
- 130: Reihe
- 132: Spalte
- 134: Windung
- 136: Ausgangsstelle
- 138a: Spiralförmige Wicklung
- 138b: Spiralförmige Wicklung
- 140a: Spiralförmige Wicklung
- 140b: Spiralförmige Wicklung
- 142a: Randwicklungsabschnitt
- 142b: Randwicklungsabschnitt
- 144a: Randwicklungsabschnitt
- 144b: Randwicklungsabschnitt
- 146: Erster Verbindungstyp
- 148: Abschnitt
- 150: Zweiter Verbindungstyp
- 152: Randwicklungsabschnitt
- 154: Dritter elektrischer Verbindungstyp
- 156: Randwicklungsabschnitt
- 158: Gerader Abschnitt
- 170: Haltefaden
- 172: Heizplatte

## Patentansprüche

1. Werkzeugvorrichtung (10; 28) zur Herstellung eines Verbundwerkstoff-Bauteils, umfassend ein Formwerkzeug (12; 30) mit einem Anlagebereich (14) für ein Werkstück (16), wobei das Formwerkzeug (12; 30) mindestens in einem Teilbereich aus einem elektrisch leitfähigen Material hergestellt ist, und eine Induktionsheizvorrichtung (18; 110) mit einer induktiven Heizmatte (20; 115), wobei die Heizmatte (20; 115) beabstandet zu dem Formwerkzeug (12; 30) positioniert ist, eine Positionierung des Werkstücks (16) zwischen der Heizmatte (20; 115) und dem Formwerkzeug (12; 30) anliegend an dem Formwerkzeug (12; 30) vorgesehen ist, und eine Beheizung des Formwerkzeugs (12; 30) mindestens in einem Teilbereich durch die Induktionsheizvorrichtung (18; 110) vorgesehen ist, **gekennzeichnet durch** einen Stempel (36) als Gegenelement für das Formwerkzeug (12; 30), wobei die Heizmatte (20; 115) in den Stempel (36) integriert ist.

2. Werkzeugvorrichtung nach Anspruch 1, **dadurch gekennzeichnet, dass** das elektrisch leitfähige Material eine elektrische Leitfähigkeit aufweist, welche mindestens 10³ S/m, vorzugsweise mindestens 10⁴ S/m beträgt, vorzugsweise mindestens 10⁵ S/m und insbesondere mindestens 0,5 · 10⁶ S/m beträgt.

3. Werkzeugvorrichtung nach Anspruch 1 oder 2, **dadurch gekennzeichnet, dass** das Formwerkzeug (12; 30) vollständig aus dem elektrisch leitfähigen Material hergestellt ist oder einen Teilbereich (32) aus dem elektrisch leitfähigen Material aufweist, welcher so angeordnet und ausgebildet ist, dass über eine Beheizung dieses Teilbereichs durch die Induktionsheizvorrichtung (18; 110) das Werkstück (16) beheizbar ist, wobei insbesondere dieser Teilbereich an dem Anlagebereich (14) für das Werkstück (16) angeordnet oder gebildet ist.

4. Werkzeugvorrichtung nach einem der vorangehenden Ansprüche,
**dadurch gekennzeichnet, dass** der Teilbereich aus einer Lage (32) an elektrisch leitfähigem Material gebildet ist, welche fest mit einem Trägerbereich (34) des Formwerkzeugs (12; 30) verbunden ist oder auf dem Trägerbereich (34) aufgelegt ist, und insbesondere
**dadurch gekennzeichnet, dass** die Lage (32) aus elektrisch leitfähigem Material eine Beschichtung an dem Formwerkzeug (12; 30) ist.

5. Werkzeugvorrichtung nach einem der vorangehenden Ansprüche, **dadurch gekennzeichnet, dass** die Induktionsheizvorrichtung (18; 110) eine Ohmsche Heizfunktion aufweist, und insbesondere über die Induktionsheizvorrichtung (18; 110) das Werkstück (16) auch direkt beheizbar ist.

6. Werkzeugvorrichtung nach einem der vorangehenden Ansprüche, **dadurch gekennzeichnet, dass** mindestens ein Suszeptor (26) zwischen dem Werkstück (16) und der Heizmatte (20; 115) positioniert ist, wobei der mindestens eine Suszeptor (26) für elektromagnetische Felder der Heizmatte (20; 115) derart durchlässig ist, dass das Formwerkzeug (12; 30) durch die Heizmatte (20; 115) beheizbar ist, und der mindestens eine Suszeptor (26) ist durch die Heizmatte (20; 115) insbesondere induktiv beheizbar.

7. Werkzeugvorrichtung nach einem der vorangehenden Ansprüche, **dadurch gekennzeichnet, dass** die induktive Heizmatte (20; 115) eine Matte mit einer Spulenvorrichtung (114) ist.

8. Werkzeugvorrichtung nach einem der vorangehenden Ansprüche,
**dadurch gekennzeichnet, dass** die induktive Heizmatte (20; 115) mindestens eines der Folgenden ist:
- biegeflexibel;
- biegeelastisch;
- biegeschlaff;
- formstabil;
- formstabil verformbar.

9. Werkzeugvorrichtung nach einem der vorangehenden Ansprüche, **dadurch gekennzeichnet, dass** die induktive Heizmatte (20; 115) umfasst:
einen Träger (112) und eine Spulenvorrichtung (114), welche an dem Träger (112) angeordnet ist.

10. Werkzeugvorrichtung nach Anspruch 7 oder 9, **dadurch gekennzeichnet, dass** die Spulenvorrichtung (114) eine Mehrzahl von spiralförmigen Wicklungen (128) umfasst, welche in Reihen (130) und Spalten (132) angeordnet sind, und insbesondere
**dadurch gekennzeichnet, dass** die spiralförmigen Wicklungen (128) so ausgebildet sind, dass bei Stromdurchfluss der spiralförmigen Wicklungen (128) eine Stromrichtung in benachbarten Randwicklungsabschnitten (142a, 142b; 144a, 144b) von in einer Reihe (130) oder Spalte (132) benachbarten spiralförmigen Wicklungen (138a, 138b; 140a, 140b) mindestens näherungsweise gleich ist, und insbesondere **gekennzeichnet durch** mindestens eines der Folgenden:
- eine erste spiralförmige Wicklung (138a; 140a) weist einen ersten Randwicklungsabschnitt (142a; 144a) auf und eine zweite spiralförmige Wicklung (138b; 140b) weist einen zweiten Randwicklungsabschnitt (142b; 144b) auf, wobei die erste spiralförmige Wicklung (138a; 140a) und die zweite spiralförmige Wicklung (138b; 140b) benachbart sind und wobei der erste Randwicklungsabschnitt (142a; 144a) und der zweite Randwicklungsabschnitt (142b; 144b) benachbart sind, und wobei bei Stromfluss die Stromrichtung in dem ersten Randwicklungsabschnitt (142a; 144a) und dem zweiten Randwicklungsabschnitt (142b; 144b) mindestens näherungsweise gleich ist;
- bei Stromdurchfluss in benachbarten Randwicklungsabschnitten (142a, 142b; 144a, 144b) von benachbarten spiralförmigen Wicklungen (138a, 138b; 140a, 140b) liegt sowohl in einer Reihe (130) als auch in einer Spalte (132) mindestens näherungsweise die gleiche Stromrichtung vor;
- ein Drehsinn eines elektrischen Stroms innerhalb einer spiralförmigen Wicklung (128) ist gleichsinnig und die Drehsinne in benachbarten spiralförmigen Wicklungen (128) sind entgegengesetzt.

11. Werkzeugvorrichtung nach einem der Ansprüche 7, 9 oder 10, **dadurch gekennzeichnet, dass** die Spulenvorrichtung (114) mindestens eine Flachspule umfasst.

12. Werkzeugvorrichtung nach einem der Ansprüche 7, 9 bis 11, **dadurch gekennzeichnet, dass** die Spulenvorrichtung (114) durch mindestens eine Hochfrequenzlitze (116) gebildet ist, und insbesondere
**dadurch gekennzeichnet, dass** die mindestens eine Hochfrequenzlitze (116) über einen oder mehrere Haltefäden (170) an einem Träger (112) gehalten ist, und insbesondere, dass der Träger (112) ein Maschennetz ist und insbesondere die mindestens eine Hochfrequenzlitze (116) mit dem Maschennetz vernäht ist, und insbesondere, dass der Träger (112) ein textiles Gebilde ist.

13. Verfahren zur Herstellung eines Bauteils aus einem Verbundwerkstoff mittels eines Formwerkzeugs (12; 30), bei dem ein Werkstück (16) an das Formwerkzeug (12; 30) an einem Anlagebereich (14) des Formwerkzeugs (12; 30) angelegt wird, und mindestens ein Teilbereich (24; 32) des Anlagebereichs (14) des Formwerkzeugs (12; 30) durch eine induktive Heizmatte (20; 115) berührungslos beheizt wird, wobei das Werkstück (16) zwischen dem Anlagebereich (14) und der Heizmatte (20; 115) positioniert wird, und bei dem ein Stempel (36) als Gegenelement für das Formwerkzeug (12; 30) verwendet wird, wobei die Heizmatte (20; 115) in den Stempel (36) integriert ist.

14. Verfahren nach Anspruch 13, **gekennzeichnet durch** mindestens eines der Folgenden:
- die Heizmatte (20; 115) wird selber **durch** Ohmsche Wärme aufgeheizt und beheizt über Ohmsche Wärme das Werkstück (16);
- zwischen der Heizmatte (20; 115) und dem Werkstück (16) wird ein Suszeptor (26) positioniert, welcher für elektromagnetische Felder der Heizmatte (20; 115) derart durchlässig ist, dass das Formwerkzeug (12; 30) **durch** die Heizmatte (20; 115) induktiv beheizt wird, und wobei der Suszeptor (26) von der Heizmatte (20; 115) induktiv beheizt wird;
- die Heizmatte (20; 115) ist an eine Werkstückform angepasst oder anpassbar.

## Claims

1. Tool apparatus (10; 28) for producing a composite material component part, said tool apparatus comprising a forming tool (12; 30) having a contact region (14) for a workpiece (16), wherein the forming tool (12; 30) is made, in at least a portion thereof, of an electrically conductive material, and an induction heating apparatus (18; 110) having an inductive heating mat (20; 115), wherein the heating mat (20; 115) is positioned in spaced relation to the forming tool (12; 30), wherein a positioning of the workpiece (16) is provided between the heating mat (20; 115) and the forming tool (12; 30), in contact with the forming tool (12; 30), and wherein heating of the forming tool (12; 30) is provided, in at least a portion thereof, by the induction heating apparatus (18; 110), **characterized by** a punch (36) as a counter-element to the forming tool (12; 30), wherein the heating mat (20; 115) is integrated into the punch (36).

2. Tool apparatus in accordance with claim 1, **characterized in that** the electrically conductive material has an electrical conductivity which is at least 10³ S/m, preferably at least 10⁴ S/m, preferably at least 10⁵ S/m and, in particular, at least 0.5 · 10⁶ S/m.

3. Tool apparatus in accordance with claim 1 or 2, **characterized in that** the forming tool (12; 30) is made entirely of the electrically conductive material or has the electrically conductive material provided in a portion (32) thereof which is arranged and configured such that the workpiece (16) is heatable via heating said portion by the induction heating apparatus (18; 110), in particular wherein said portion is arranged or formed at the contact region (14) for the workpiece (16).

4. Tool apparatus in accordance with any one of the preceding claims, **characterized in that** the portion is formed from a layer (32) of electrically conductive material which is fixedly connected to a support region (34) of the forming tool (12; 30) or is placed on the support region (34), and in particular
**characterized in that** the layer (32) of electrically conductive material is a coating on the forming tool (12; 30).

5. Tool apparatus in accordance with any one of the preceding claims, **characterized in that** the induction heating apparatus (18; 110) comprises an ohmic heating function, and in particular **in that** the workpiece (16) is also directly heatable via the induction heating apparatus (18; 110).

6. Tool apparatus in accordance with any one of the preceding claims, **characterized in that** at least one susceptor (26) is positioned between the workpiece (16) and the heating mat (20; 115), wherein the at least one susceptor (26) is permeable to electromagnetic fields of the heating mat (20; 115) such that the forming tool (12; 30) is heatable by the heating mat (20; 115), and the at least one susceptor (26) is heatable, in particular inductively heatable, by the heating mat (20; 115).

7. Tool apparatus in accordance with any one of the preceding claims, **characterized in that** the inductive heating mat (20; 115) is a mat that comprises a coil apparatus (114).

8. Tool apparatus in accordance with any one of the preceding claims, **characterized in that** the inductive heating mat (20; 115) is at least one of the following:
- flexurally flexible;
- flexurally elastic;
- flexurally limp;
- shape-retaining;
- deformable and shape-retaining.

9. Tool apparatus in accordance with any one of the preceding claims, **characterized in that** the inductive heating mat (20; 115) comprises a carrier (112) and a coil apparatus (114) which is arranged on the carrier (112).

10. Tool apparatus in accordance with claim 7 or 9, **characterized in that** the coil apparatus (114) comprises a plurality of spiral-shaped windings (128) which are arranged in rows (130) and columns (132), and in particular
**characterized in that** the spiral-shaped windings (128) are configured such that, when a current flows through the spiral-shaped windings (128), a direction of current is at least approximately in the same direction in adjacent peripheral winding sections (142a, 142b; 144a, 144b) of spiral-shaped windings (138a, 138b; 140a, 140b) adjacent in a row (130) or column (132), and in particular **characterized by** at least one of the following:
- a first spiral-shaped winding (138a; 140a) comprises a first peripheral winding section (142a; 144a) and a second spiral-shaped winding (138b; 140b) comprises a second peripheral winding section (142b; 144b), wherein the first spiral-shaped winding (138a; 140a) and the second spiral-shaped winding (138a; 140b) are adjacent and wherein the first peripheral winding section (142a; 144a) and the second peripheral winding section (142b; 144b) are adjacent, and wherein when current flow occurs, the direction of current is at least approximately in the same direction in the first peripheral winding section (142a; 144a) and the second peripheral winding section (142b; 144b);
- the direction of current is at least approximately in the same direction in both a row (130) and a column (132), when current flow occurs in adjacent peripheral winding sections (142a, 142b; 144a, 144b) of adjacent spiral-shaped windings (138a, 138b; 140a, 140b);
- a sense of rotation of an electrical current is in the same sense within a spiral-shaped winding (128), and the senses of rotation are in opposite senses in adjacent spiral-shaped windings (128).

11. Tool apparatus in accordance with any one of claims 7, 9 or 10, **characterized in that** the coil apparatus (114) comprises at least one flat coil.

12. Tool apparatus in accordance with any one of claims 7, 9 to 11, **characterized in that** the coil apparatus (114) is formed by at least one high-frequency Litz wire (116), and in particular
**characterized in that** the at least one high-frequency Litz wire (116) is held to a carrier (112) via one or more holding threads (170), and in particular **in that** the carrier (112) is a mesh network, and in particular in that the at least one high-frequency Litz wire (116) is sewn in place to the mesh network, and in particular **in that** the carrier (112) is a textile structure.

13. Method for producing a component part from a composite material by way of a forming tool (12; 30), in which method a workpiece (16) is placed in contact against the forming tool (12; 30) at a contact region (14) of the forming tool (12; 30), and at least a portion (24; 32) of the contact region (14) of the forming tool (12; 30) is non-contact heated by an inductive heating mat (20; 115), wherein the workpiece (16) is positioned between the contact region (14) and the heating mat (20; 115), and in which a punch (36) is used as a counter-element to the forming tool (12; 30), wherein the heating mat (20; 115) is integrated into the punch (36).

14. Method in accordance with claim 13, **characterized by** at least one of the following:
- the heating mat (20; 115) itself is heated by ohmic heat and heats the workpiece (16) via ohmic heat;
- a susceptor (26) is positioned between the heating mat (20; 115) and the workpiece (16), which susceptor (26) is permeable to electromagnetic fields of the heating mat (20; 115) such that the forming tool (12; 30) is inductively heated by the heating mat (20; 115), and wherein the susceptor (26) is inductively heated by the heating mat (20; 115);
- the heating mat (20; 115) is adapted or is adaptable to a shape of a workpiece.

## Revendications

1. Dispositif d'outil (10 ; 28) pour la fabrication d'un composant en matériau composite, comprenant un outil de moulage (12 ; 30) avec une zone d'appui (14) pour une pièce à usiner (16), dans lequel l'outil de moulage (12 ; 30) est fabriqué au moins dans une zone partielle à partir d'un matériau électriquement conducteur, et un dispositif de chauffage par induction (18 ; 110) avec un tapis chauffant (20 ; 115) à induction, dans lequel le tapis chauffant (20 ; 115) est positionné à distance de l'outil de moulage (12 ; 30), un positionnement de la pièce à usiner (16) entre le tapis chauffant (20 ; 115) et l'outil de moulage (12 ; 30) en appui sur l'outil de moulage (12 ; 30) est prévu, et un chauffage de l'outil de moulage (12 ; 30) au moins dans une zone partielle par le dispositif de chauffage par induction (18 ; 110) est prévu, **caractérisé par** un poinçon (36) comme contre-élément pour l'outil de moulage (12 ; 30), dans lequel le tapis chauffant (20 ; 115) est intégré dans le poinçon (36).

2. Dispositif d'outil selon la revendication 1, **caractérisé en ce que** le matériau électriquement conducteur présente une conductivité électrique, laquelle est d'au moins 10³ S/m, de préférence d'au moins 10⁴ S/m, de préférence d'au moins 10⁵ S/m et notamment d'au moins 0,5•10⁶ S/m.

3. Dispositif d'outil selon la revendication 1 ou 2, **caractérisé en ce que** l'outil de moulage (12 ; 30) est entièrement fabriqué à partir du matériau électriquement conducteur ou présente une zone partielle (32) composée du matériau électriquement conducteur, laquelle est disposée et réalisée de sorte que la pièce (16) peut être chauffée par le dispositif de chauffage par induction (18 ; 110) via un chauffage de cette zone partielle, dans lequel cette zone partielle est notamment disposée ou formée sur la zone d'appui (14) pour la pièce (16).

4. Dispositif d'outil selon l'une quelconque des revendications précédentes, **caractérisé en ce que** la zone partielle est formée d'une couche (32) de matériau électriquement conducteur, laquelle est solidaire d'une zone support (34) de l'outil de moulage (12 ; 30) ou est posée sur la zone support (34), et notamment
**caractérisé en ce que** la couche (32) en matériau électriquement conducteur est un revêtement sur l'outil de moulage (12 ; 30).

5. Dispositif d'outil selon l'une quelconque des revendications précédentes, **caractérisé en ce que** le dispositif de chauffage par induction (18 ; 110) présente une fonction de chauffage ohmique, et notamment la pièce à usiner (16) peut également être chauffée directement via le dispositif de chauffage par induction (18 ; 110).

6. Dispositif d'outil selon l'une quelconque des revendications précédentes, **caractérisé en ce qu'**au moins un suscepteur (26) est positionné entre la pièce à usiner (16) et le tapis chauffant (20 ; 115), dans lequel l'au moins un suscepteur (26) est perméable aux champs électromagnétiques du tapis chauffant (20 ; 115) de sorte que l'outil de moulage (12 ; 30) puisse être chauffé par le tapis chauffant (20 ; 115), et l'au moins un suscepteur (26) peut être chauffé notamment par induction par le tapis chauffant (20 ; 115).

7. Dispositif d'outil selon l'une quelconque des revendications précédentes, **caractérisé en ce que** le tapis chauffant (20 ; 115) à induction est un tapis avec un dispositif de bobine (114).

8. Dispositif d'outil selon l'une quelconque des revendications précédentes, **caractérisé en ce que** le tapis chauffant (20 ; 115) à induction est au moins un de ce qui suit :
- flexible ;
- élastique ;
- souple et pliable ;
- à stabilité de forme ;
- déformable à stabilité de forme.

9. Dispositif d'outil selon l'une quelconque des revendications précédentes, **caractérisé en ce que** le tapis chauffant (20 ; 115) à induction comprend : un support (112) et un dispositif de bobine (114), lequel est disposé sur le support (112).

10. Dispositif d'outil selon la revendication 7 ou 9, **caractérisé en ce que** le dispositif de bobine (114) comprend une pluralité d'enroulements en spirale (128), lesquels sont disposés en rangées (130) et en colonnes (132), et notamment
**caractérisé en ce que** les enroulements en spirale (128) sont réalisés de sorte qu'en cas de flux de courant des enroulements en spirale (128), un sens de courant dans des sections d'enroulement de bord (142a, 142b ; 144a, 144b) adjacentes d'enroulements en spirale (138a, 138b ; 140a, 140b) adjacents dans une rangée (130) ou colonne (132) est au moins approximativement identique, et notamment **caractérisé par** au moins un de ce qui suit :
- un premier enroulement en spirale (138a ; 140a) présente une première section d'enroulement de bord (142a ; 144a) et un deuxième enroulement en spirale (138b ; 140b) présente une deuxième section d'enroulement de bord (142b ; 144b), dans lequel le premier enroulement en spirale (138a ; 140a) et le deuxième enroulement en spirale (138b ; 140b) sont adjacents et dans lequel la première section d'enroulement de bord (142a ; 144a) et la deuxième section d'enroulement de bord (142b ; 144b) sont adjacentes, et dans lequel, en cas de flux de courant, le sens du courant dans la première section d'enroulement de bord (142a ; 144a) et la deuxième section d'enroulement de bord (142b ; 144b) est au moins approximativement identique ;
- en cas de flux de courant dans des sections d'enroulement de bord (142a, 142b ; 144a, 144b) adjacentes d'enroulements en spirale (138a, 138b ; 140a, 140b) adjacents, le sens du courant est au moins approximativement le même tant dans une rangée (130) que dans une colonne (132) ;
- un sens de rotation d'un courant électrique à l'intérieur d'un enroulement en spirale (128) est identique et les sens de rotation dans les enroulements en spirale (128) adjacents sont opposés.

11. Dispositif d'outil selon l'une quelconque des revendications 7, 9 ou 10, **caractérisé en ce que** le dispositif de bobine (114) comprend au moins une bobine plate.

12. Dispositif d'outil selon l'une quelconque des revendications 7, 9 à 11, **caractérisé en ce que** le dispositif de bobine (114) est formé par au moins un toron haute fréquence (116), et notamment
**caractérisé en ce que** l'au moins un toron haute fréquence (116) est maintenu par un ou plusieurs fils de retenue (170) sur un support (112), et notamment que le support (112) est un treillis et notamment l'au moins un toron haute fréquence (116) est cousu avec le treillis, et notamment que le support (112) est une structure textile.

13. Procédé pour la fabrication d'un composant à partir d'un matériau composite au moyen d'un outil de moulage (12 ; 30), selon lequel une pièce à usiner (16) est placée sur l'outil de moulage (12 ; 30) sur une zone d'appui (14) de l'outil de moulage (12 ; 30), et au moins une zone partielle (24 ; 32) de la zone d'appui (14) de l'outil de moulage (12 ; 30) est chauffée sans contact par un tapis chauffant (20 ; 115) à induction, dans lequel la pièce à usiner (16) est positionnée entre la zone d'appui (14) et le tapis chauffant (20 ; 115), et selon lequel un poinçon (36) est utilisé comme contre-élément pour l'outil de moulage (12 ; 30), dans lequel le tapis chauffant (20 ; 115) est intégré dans le poinçon (36).

14. Procédé selon la revendication 13, **caractérisé par** au moins l'un de ce qui suit :
- le tapis chauffant (20 ; 115) est lui-même chauffé par chaleur ohmique et chauffe la pièce à usiner (16) par chaleur ohmique ;
- un suscepteur (26) est positionné entre le tapis chauffant (20 ; 115) et la pièce à usiner (16), lequel est perméable aux champs électromagnétiques du tapis chauffant (20 ; 115), de sorte que l'outil de moulage (12 ; 30) est chauffé par induction par le tapis chauffant (20 ; 115), et dans lequel le suscepteur (26) est chauffé par induction par le tapis chauffant (20 ; 115) ;
- le tapis chauffant (20 ; 115) est adapté ou adaptable à un moule de pièce à usiner.
